# EUROPEAN PATENT APPLICATION

(11) **EP 2 579 196 A1**
(43) Date of publication of application: **10.04.2013**
(21) Application number: 11786573.3
(22) Date of filing: 20.05.2011
(51) Int. Cl.: G06Q 20/00

(54) **SETTLEMENT AND REMITTANCE-PROCESSING METHOD OF VIRTUAL MONEY, SETTLEMENT AND REMITTANCE-PROCESSING SYSTEM, AND SETTLEMENT AND REMITTANCE-PROCESSING PROGRAM**

(30) Priority: 25.05.2010 JP 2010119314
(71) Applicant: NEC Corporation, Tokyo 108-8001 (JP); NEC Soft, Ltd., Tokyo 136-8627 (JP)
(72) Inventor: NEZU Satoshi, Tokyo 108-8001 (JP); KAWANO Yoshitaka, Tokyo 136-8627 (JP)
(74) Representative: Betten & Resch
(86) International application number: PCT/JP2011/061667
(87) International publication number: WO 2011/148874

(57) **Abstract**

Provided is a settlement and remittance-processing method, wherein processing that involves transfer of virtual money, such as settlement or remittance, is achieved with a single system. A virtual money management apparatus includes an account management storage section which stores a value of the virtual money owned by the users and company; an account management function section which includes virtual money accounts for each of the users and company and associates the virtual money accounts with the virtual money stored in the account management storage section to manage virtual money using the virtual money accounts; and a settlement/remittance management function section which receives designation of the user or company which is to be a transfer destination of the virtual money, specifies a virtual money account associated with the designated user or company by using the account management function section, and transfers the virtual money to the specified virtual money account.

## Description

### {Technical Field}

The present invention relates to a settlement and remittance-processing of electronic information (hereinafter, appropriately referred to as "virtual money") having a monetary value, such as electronic money, point, and coupon.

### {Background Art}

E-commerce is now widely and commonly being conducted on a network such as the Internet, a mobile communication network, or an advanced communication network (hereinafter, collectively and appropriately referred to "network").

In the e-commerce on such a network, electronic information (hereinafter, appropriately referred to as "virtual money") having a monetary value, such as electronic money, point, and coupon, owned by a user is sometimes used to make payment for goods, etc.

For example, PTL 1 describes a technique that makes it easy to determine which one of a plurality of types of electronic money is selected for making payment.

### {Citation List}

### {Patent Literature}

{PTL 1} JP-A-2010-61509

### {Summary of Invention}

### {Technical Problem}

The technique as described above makes it easy to make settlement using electronic money. However, the technique described above relates only to settlement and does not relate to remittance of electronic money between users.

When performing the electronic money remittance, a company who carries out trading on the network always connects their servers to the network so as to be in a ready state for receiving money from users. However, when it comes to remittance between users, users on a reception side are not always in a ready state for accepting the remittance.

In order to cope with this, a system for managing, on a server, the virtual money owned by the users can be considered. This allows the users to be always in the ready state for accepting the remittance. However, different processing procedures are required for settlement of virtual money and remittance or exchange of virtual money, respectively. Thus, when it is necessary to perform a virtual money remittance service in a virtual money settlement service, a money remittance system and a money exchange system having entirely different mechanisms need to be implemented. Similarly, when it is necessary to perform point awarding, a mechanism for embodying the point awarding needs to be newly created separately from the virtual money settlement mechanism.

An object of the present invention is, therefore, to provide a settlement and remittance-processing method of virtual money, a settlement and remittance-processing system thereof, and a settlement and remittance-processing program thereof capable of achieving processing that involves transfer of virtual money, such as settlement and remittance, with a single system.

### {Solution to Problem}

According to a first aspect of the present invention, there is provided a virtual money management apparatus that is connected to terminals used by users and a company's site connected to the users' terminal and configured to manage virtual money having a monetary value, the apparatus including: an account management storage section which stores a value of the virtual money owned by the users and company; an account management function section which has virtual money accounts for each of the users and company and associates the virtual money accounts with the virtual money stored in the account management storage section to manage virtual money using the virtual money accounts; and a settlement/remittance management function section which receives designation of the user or company which is to be a transfer destination of the virtual money, not of the virtual money account which is to be a transfer destination of the virtual money, specifies a virtual money account associated with the designated user or company using the account management function section, and transfers the virtual money to the specified virtual money account.

According to a second aspect of the present invention, there is provided a virtual money management method performed by a virtual money management apparatus that is connected to terminals used by users and a company's site connected to the users' terminal and configured to manage virtual money having a monetary value, the method including: a preparation step of preparing an account management storage section which stores a value of the virtual money owned by the users and company; an account management function step of managing virtual money using the virtual money accounts by providing virtual money accounts for each of the users and company and associating the virtual money accounts with the virtual money stored in the account management storage section; and a settlement/remittance management function step of receiving designation of the user or company which is to be a transfer destination of the virtual money, not of the virtual money account which is to be a transfer destination of the virtual money, specifying a virtual money account associated with the designated user or company by performing the account management function step, and transferring the virtual money to the specified virtual money account.

According to a third aspect of the present invention, there is provided a virtual money management program installed in a virtual money management apparatus that is connected to terminals used by users and a company's site connected to the users' terminal and configured to manage virtual money having a monetary value, the program allowing a computer to function as a virtual money management apparatus including: an account management storage section which stores a value of the virtual money owned by the users and company; an account management function section which has virtual money accounts for each of the users and company and associates the virtual money accounts with the victual money stored in the account management storage section to manage virtual money using the virtual money accounts; and a settlement/remittance management function section which receives designation of the user or company which is to be a transfer destination of the virtual money, not of the virtual money account which is to be a transfer destination of the virtual money, specifies a virtual money account associated with the designated user or company by using the account management function section, and transfers the virtual money to the specified virtual money account.

### {Advantageous Effects of Invention}

According to the present invention, the virtual money account is provided in the virtual money management apparatus so as to manage transfer of the virtual money. This allows achievement of processing that involves transfer of virtual money, such as settlement and remittance, with a single system.

### {Brief Description of Drawings}

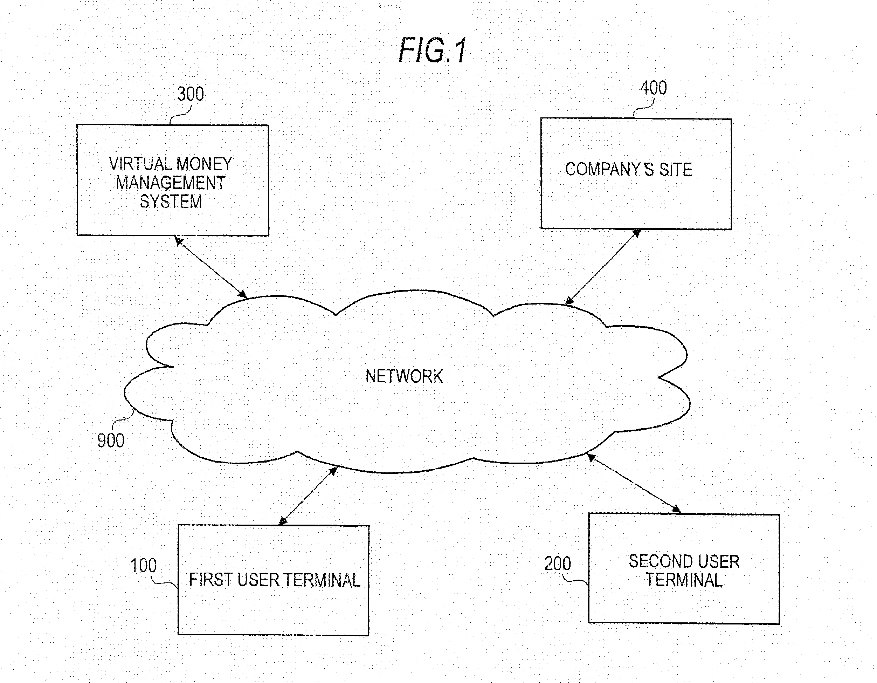

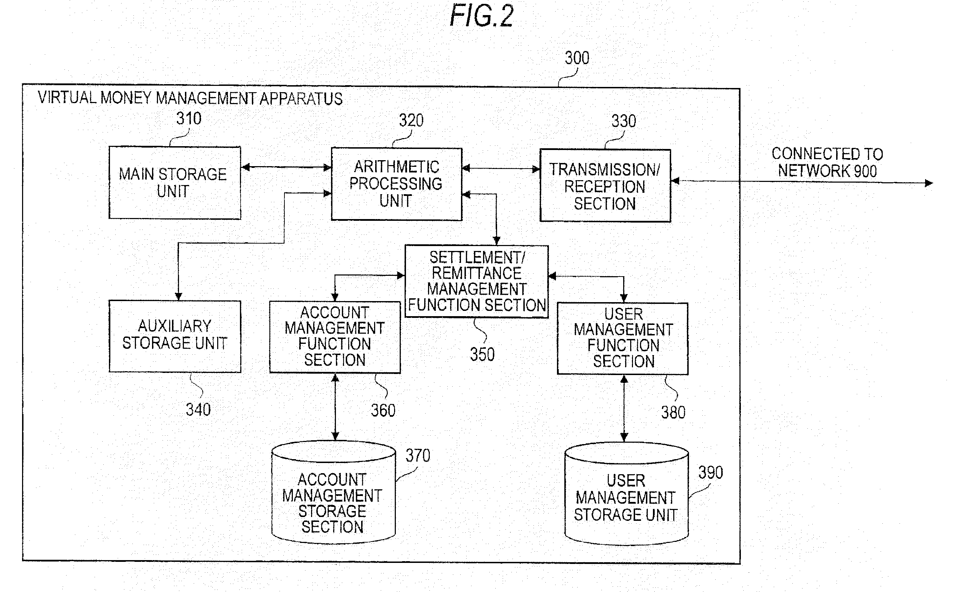

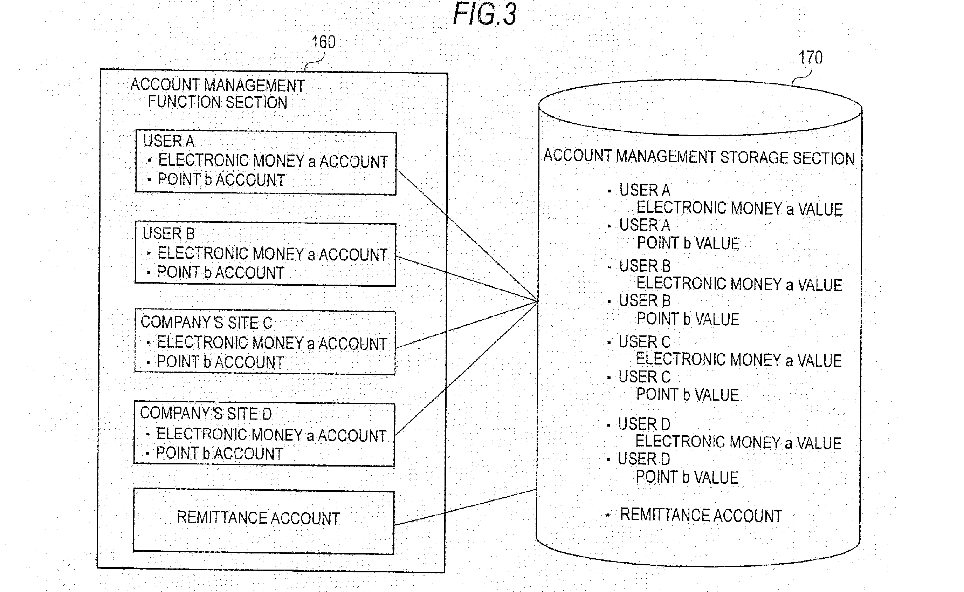

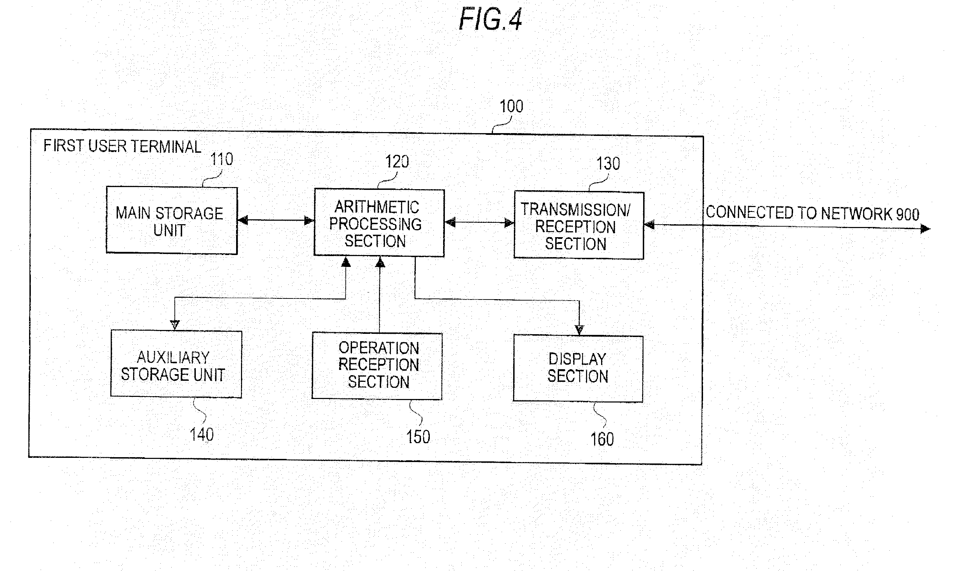

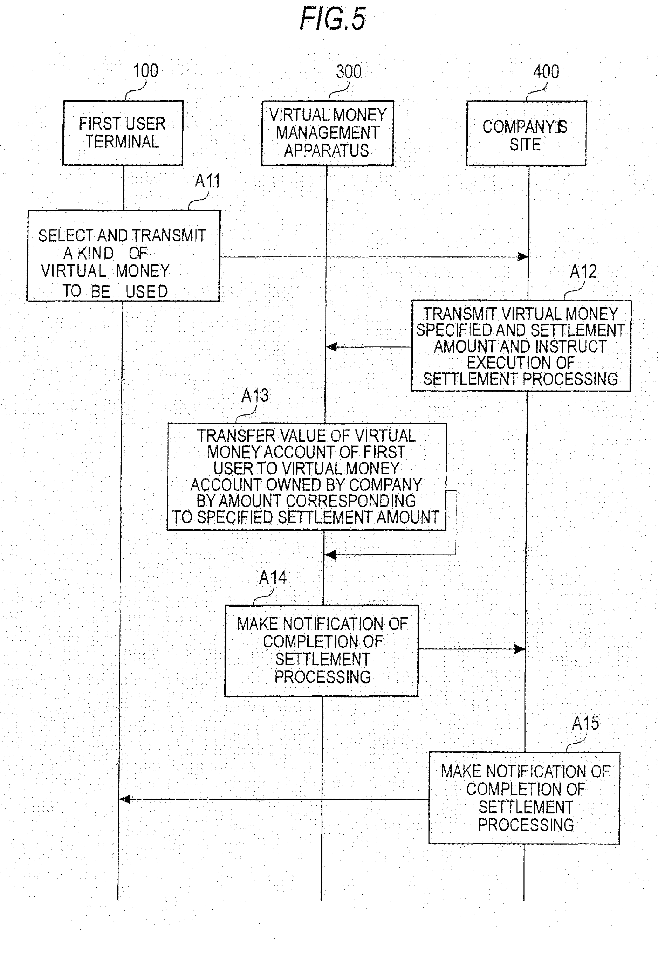

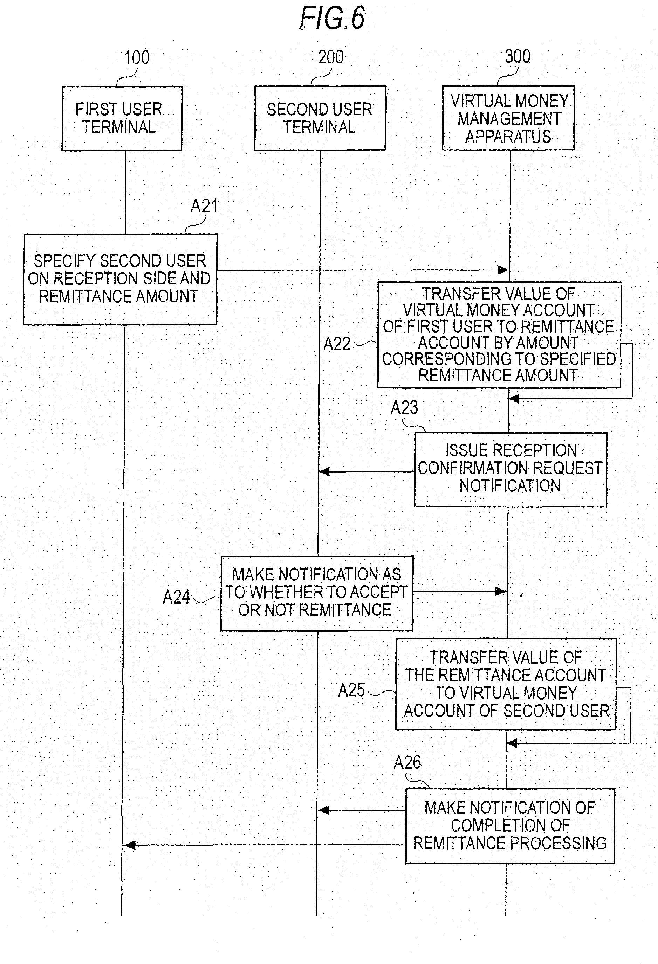

{FIG. 1} A view illustrating a basic configuration of an exemplary embodiment of the present invention.
{FIG. 2} A view illustrating a basic configuration of a virtual money management apparatus in the exemplary embodiment of the present invention.
{FIG. 3} A view illustrating a management method of a value in the exemplary embodiment of the present invention.
{FIG. 4} A view illustrating a basic configuration of a user terminal in the exemplary embodiment of the present invention.
{FIG. 5} A sequence diagram illustrating basic operation of the exemplary embodiment of the present invention to be performed in settlement processing between a user and a company.
{FIG. 6} A sequence diagram illustrating basic operation of the exemplary embodiment of the present invention to be performed in remittance processing between users.

### {Reference Signs List}

100: First user terminal
110: Main storage unit
120: Arithmetic processing unit
130: Transmission/reception section
140: Auxiliary storage unit
150: Operation reception section
160: Display section
200: Second user terminal
300: Virtual money management apparatus
310: Main storage unit
320: Arithmetic processing unit
330: Transmission/reception section
340: Auxiliary storage unit
350: Remittance management function section
360: Account management function section
370: Account management storage section
380: Settlement/user management function section
390: User management storage unit
400: Company's site

### {Description of Embodiments}

An exemplary embodiment of the present invention will be described in detail with reference to the accompanying drawings. The present exemplary embodiment is used by a user who makes payment and remittance using virtual money (hereinafter, appropriately referred to merely as "user") and a company who provides e-commerce allowing the user to purchase goods or content (hereinafter, appropriately referred to merely as "company").

FIG. 1 is a view illustrating the entire configuration of the exemplary embodiment. Referring to FIG. 1, the present exemplary embodiment includes a first user terminal 100, a second user terminal 200, a virtual money management apparatus 300, and a company's site 400.

The first user terminal 100 and second user terminal 200 are terminals that the user uses to make payment and remittance. The first user terminal 100 and second user terminal 200 may be embodied by any apparatus such as a personal computer or a mobile phone. Although two user terminals are illustrated in FIG. 1 for descriptive purpose, the number of the user terminals is not limited to this, but any number of the user terminals may be connected to a network 900.

The virtual money management apparatus 300 is an apparatus that performs settlement and remittance-processing of virtual money, which is embodied by, e.g., a company's server provided on a network.

The company's site 400 is a site where the user utilizes e-commerce to purchaser goods or content. The site 300 is embodied by the user browsing a document on, e.g., a web server provided on a network through a Web browser of the user terminal 200.

The network 900 is, e.g., the Internet, a mobile network, or an advanced network but not limited thereto. Further, the network 900 may conform to any communication standard. Furthermore, it does not matter whether the network 900 is wired or wireless. The first user terminal 100, second user terminal 200, virtual money management apparatus 300, and company's site 400 communicate with each other over the network 900.

The following describes in detail the virtual money management apparatus 300 with reference to FIG. 2. Referring to FIG. 2, the virtual money management apparatus 300 includes a main storage unit 310, an arithmetic processing unit 320, a transmission/reception section 330, an auxiliary storage unit 340, a remittance management function section 350, an account management function section 360, an account management storage section 370, a settlement/user management function section 380, and a user management storage unit 390.

The main storage unit 310 is a storage unit such as a RAM (Random Access Memory). The arithmetic processing unit 320 is an arithmetic unit such as a CPU (Central Processing Unit) and is configured to perform arithmetic processing. The transmission/reception section 330 is a section for performing communication over the network 900.

The auxiliary storage unit 340 is a storage unit such as a HDD (Hard Disk Drive) or a SSD (Solid State Drive) and is configured to store various data and programs. The remittance management function section 350, account management function section 360, and settlement/user management function section 380 are sections specific to the present exemplary embodiment. Functions of the remittance management function section 350, account management function section 360, and settlement/user management function section 380 are each embodied by the arithmetic processing unit 320 loading a program (software) stored in the auxiliary storage unit 340 and executing arithmetic processing using the loaded program and main storage unit 310.

The account management function section 360 has a function of managing an account in which virtual money is held. The account management storage section 370 is a storage unit that records information of the account. The remittance management function section 350 has a function of performing settlement and remittance-processing of virtual money.

The settlement/user management function section 380 has a function of managing a user who makes payment and remittance. The user management storage unit 390 is a storage unit that records user information. The settlement/user management function section 380 uses some sort of an identifier such as a mail address or an ID to search the user management storage unit 390 to thereby identify a user or a company identified by the identifier.

Although the account management storage section 370, user management storage unit 390, and auxiliary storage unit 340 are illustrated as different storage units in FIG. 2, this is nothing more than example. For example, the account management storage section 370 and user management storage unit 390 may be included in the auxiliary storage unit 340. Alternatively, any or all of the account management storage section 370, user management storage unit 390, and auxiliary storage unit 340 may be provided outside the virtual money management apparatus 300. Further alternatively, any or all of the account management storage section 370, user management storage unit 390, and auxiliary storage unit 340 may have a redundant configuration composed of a plurality of storage units.

The following describes a method of handling a value in the remittance management function section 350, account management function section 360, and settlement/user management function section 380 with reference to FIG 3.

In the present embodiment, settlement and remittance-processing of virtual money are conducted by the same processing method to allow a remittance service to be easily provided.

In the account management function section 360 illustrated in FIG. 3, a user has a virtual money account (hereinafter, appropriately referred to merely as "account") that holds/manages his or her virtual money. The user may have a plurality of types of accounts such as "electronic money 'a"' and "point 'b"'.

A value of virtual money recorded in each account (hereinafter, appropriately referred to merely as "value") is recorded in the account management storage section 370. Every time the value increases/decreases, the value recorded in the account management storage section 370 is correspondingly changed through the account management function section 360.

The user has his or her own account and makes payment and remittance utilizing the value stored in the account. As is the case with the user, the company has an account for managing virtual money owned thereby and makes settlement by transferring the value between the user's account and company's account. At this time, the settlement/remittance management function section 350 instructs the account management function section 360 to perform transfer of the value between the accounts. The account management function section 360 reduces the value of the user's virtual money account recorded in the account management storage section 370 and increases the value of the company's account recorded in the account management storage section 370 by an amount corresponding to the reduction in the value of the user's virtual money account.

The virtual money management apparatus 300 has also an account for temporarily storing the value for remittance (hereinafter, appropriately referred to as "remittance account"). When the remittance needs to be performed between the users, the value is once stored in the remittance account, and after confirmation of reception of the value on the reception side user, the value is remitted from the remittance account to an account of the reception side user. Upon reception of a remittance instruction, the settlement/remittance management function section 350 connects to the settlement/user management function section 380, searches for the reception side user via the settlement/user management function section 380, and identifies an account of the reception side user. Then, the settlement/remittance management function section 350 transfers, through the account management function section 360, the value from the virtual money account of the user to the remittance account. The settlement/remittance management function section 350 issues a reception conformation request notification to the reception side user and transfers the value from the remittance account to the account of the reception side user after confirming the reception of the value on the reception side user. After that, the settlement/remittance management function section 350 transmits a remittance completion notification of to the remittance side user and reception side user, whereby the remittance processing is completed.

For example, when remittance from a user A to a user B needs to be made, the virtual money of the user A is once transferred to a remittance account that a virtual money management system has, and thereafter, the virtual money is transferred from the remittance account of the virtual money management system to an account of the user B. The virtual money is not directly transferred from the user A to user 13, but transferred through the remittance account of the virtual money management system, whereby reception confirmation of virtual money to be transferred to the user B can be conducted. Confirming user's intent of receiving virtual money can reduce occurrence of trouble at the reception time. When the user B agrees to accept the virtual money, the virtual money is transferred from the account of the virtual money management system to the account of the user B, whereby remittance of virtual money from the user A to user B is completed. If the user B refuses to accept the virtual money or puts the reception confirmation on hold for a long period of time, the virtual money is returned from the account of the virtual money management system to the account of the user A, whereby remittance of the virtual money is canceled.

The following describes in detail the first user terminal 100 and second user terminal 200 with reference to FIG. 4. A description will be made taking the first user terminal 100 as an example. It is assumed that the first user terminal 100 is embodied by a personal computer. The user terminal of the present exemplary embodiment is not limited to the personal computer, but various types of terminals, including a mobile terminal such as a mobile phone and an IC card using a reader-writer may be used as the user terminal.

The first user terminal 100 includes a main storage unit 110, an arithmetic processing unit 120, a transmission/reception section 130, an auxiliary storage unit 140, an operation reception section 150, and a display section 160.

The main storage unit 110 is a storage unit such as a RAM. The arithmetic processing unit 120 is an arithmetic unit such as a CPU and is configured to perform arithmetic processing. The transmission/reception section 130 is a section for performing communication over the network 900.

The auxiliary storage unit 140 is a storage unit such as an HDD or an SSD and is configured to store various data and programs.

The operation reception section 150 is a section for receiving an input from a user. Specifically, the operation reception section 150 is connected to an input device such as a keyboard, a mousse, and a touch panel so as to receive input information therefrom.

The display section 160 is connected to a display unit, such as a display, four presenting information to a user and makes the display unit display information. The following describes an outline of operation of the present exemplary embodiment.

Operation of the present exemplary embodiment will be described in detail with reference to FIGS. 1 and 4 and sequence diagrams of FIGS. 5 and 6.

With reference to FIG. 4, a case where a user makes payment to the company will be described.

A first user uses the first user terminal 100 to connect to the company's site 400. On the company's site 400, the first user follows procedures required for payment in e-commerce, such as selecting an article to be purchased and purchasing the article. At this time, the user selects a kind of a virtual money to be used this time within a plurality of virtual money accounts owned by him or her and transmits the selected one (step A11).

The company's site 400 connects to the virtual money management apparatus 300 and transmits thereto the virtual money specified by the first user and a settlement amount to instruct the virtual money management apparatus 300 to perform settlement processing (step A12).

The virtual money management apparatus 300 confirms whether or not a value amount held in the virtual money account of the first user meets the settlement amount. In a case where the value amount in the virtual money account of the first user does not meet the settlement amount, the virtual money management apparatus 300 stops the settlement processing and notifies the company's site 400 of information indicating the stop of the processing. Upon reception of the information indicating the stop of the processing, the company's site 400 notifies the first user terminal 100 of failure to complete the settlement processing. The first user who has received the notification can resume the procedure from step A11 by specifying another virtual money account owned by him or her. On the other hand, in a case where the value amount in the virtual money account of the first user meets the settlement amount, the virtual money management apparatus 300 transfers the value of the virtual money account of the first user to the virtual money account owned by the company by the amount corresponding to the specified settlement amount (step A13).

The virtual money management apparatus 300 notifies the company's site 400 of completion of the settlement processing (step A14).

The company's site 400 notifies the first user terminal 100 of completion of the settlement processing (step A15).

With reference to FIG. 5, a case where a user makes remittance of virtual money to another user will be described.

It is assumed that remittance is made from the first user to the second user.

The first user uses the first user terminal 100 to connect to the virtual money management apparatus 300. At this time, the first user uses information such as a mail address or an ID that can uniquely identify a user to specify the second user on the reception side and, at the same time, specifies a remittance amount (step A21). In a case where the first user has a plurality of virtual money accounts, he or she may select and specify an arbitrary virtual money account from among the plurality of virtual money accounts.

The virtual money management apparatus 300 confirms whether or not a value amount in the virtual money account of the first user meets the specified remittance amount. In a case where the value amount in the virtual money account of the first user does not meet the remittance amount, the virtual money management apparatus 300 stops the remittance processing and notifies the first user terminal 100 of information indicating the stop of the processing. On the other hand, in a case where the value amount in the virtual money account of the first user meets the remittance amount, the virtual money management apparatus 300 transfers the value of the virtual money account of the first user to the remittance account by the amount corresponding to the specified remittance amount (step A22).

The virtual money management apparatus 300 issues a reception confirmation request notification to the reception side user, i.e., the second user. This notification to the second user can be made by an arbitrary notification method such as an e-mail, a message service (e.g:, a short message service) of a mobile phone (step A23).

Upon reception of the reception confirmation request notification, the second user uses the second terminal 200 to connect to the virtual money management apparatus 300. Then; the second user notifies the virtual money management apparatus 300 as to whether to accept or not the remittance (step A24).

If the second user refuses to accept the remittance from the first user, the virtual money management apparatus 304 transfers the value that has been transferred from the virtual money account of the first user to the remittance account back to the virtual money account of the first user. At the same time, the virtual money management apparatus 300 notifies the first user terminal 100 of reception refusal.

In a case where the second user does not issue the notification on whether to accept or not the remittance to the virtual money management system for a certain period of time, the virtual money management apparatus 300 determines timeout and stops the remittance processing and then transfers the value of the remittance account back to the virtual money account of the first user. The length of time for timeout may be arbitrarily determined. On the other hand, when the second user agrees to accept the remittance, the virtual money management apparatus 300 transfers the value of the remittance account to the virtual money account of the second user (step A25). The virtual money management function 20 notifies the first user and second user of completion of the remittance processing (step A26).

The following describes a modification of the above exemplary embodiment.

In this modification, a point service can be linked with the virtual money that is managed by the account management function in the above exemplary embodiment. The point is managed as a digitally-recorded value as in the case of the virtual money. The "point" refers to some sort of a value that can be given or used in the company's site 400. The term "point" is commonly used to refer to some sort of a value that can be given or used in the company's site 400 and is therefore used here; however, this is a merely example, and terms other than the "point" may be used to refer to this value.

After completion of step A 14 of FIG. 5 that illustrates the above exemplary embodiment, the company's site 400 gives the point to the first user. The company's site 400 connects to the virtual money management apparatus 300 and instructs the virtual money management apparatus 300 to give the point to the first user. The virtual money management apparatus 300 transfers a specified point from the virtual money account that holds the point of the company's site 400 to the virtual money account that holds the point of the first user, whereby the point awarding from the company to user is completed. Thereafter, the virtual money management apparatus 300 executes step A 15 to complete the settlement. When the user uses the point, the first user specifies the use of the point in step A11 of FIG. 5. In step A12, the company's site 400 instructs the virtual money management apparatus 300 to perform settlement processing at an amount obtained by subtracting the value corresponding to the point. At the same time, as to the use of the point, the company's site 400 instructs the virtual money management apparatus 300 to perform point use processing. In step A13, the virtual money management apparatus 300 performs the virtual money settlement processing and thereafter point settlement processing in the same manner as the virtual money settlement processing, whereby the use of the point is achieved. Thereafter, steps A14 and A 15 are executed to complete the entire settlement processing.

By modifying the above exemplary embodiment in this manner, awarding and use of the point can be made as well as the settlement processing.

The exemplary embodiment of the present invention described above provides the following various effects.

In the present exemplary embodiment, the virtual money management system provides a mechanism for transferring the virtual money between accounts. In this mechanism, the settlement processing is made by transferring the virtual money from the virtual money account of the user to the virtual money account of the company, and the remittance processing is made by transferring the virtual money from the virtual money account of a user on the payment side to the virtual money account of a user on the reception side through the account of the virtual money management system. Thus, both the settlement processing and remittance processing can be made by the transfer of the value of the virtual money between the accounts, thereby achieving a settlement system and a remittance system, which allows settlement and remittance services to be provided with the same mechanism. By utilizing the obtained mechanism, it is possible to achieve the point awarding from the company to the user through the transfer of the value between the accounts thereof, which allows achievement of various services utilizing the value, such as provision of a digital coupon from the company to user or spending a point gift between the users.

In the present exemplary embodiment, account number of a user as a purchaser is not transmitted to a vendor side in order to ensure security for users. The account of the purchaser is identified by the virtual money management system that mediates the settlement processing, and the purchaser and vendor do not directly communicate with each other. Similarly, individual information is not transmitted directly to the vendor, but only necessary information is transmitted through the virtual money management system to the vendor This allows the individual information such as account number to be firmly protected.

Further, in the present exemplary embodiment, the virtual money management apparatus has all the mechanisms involving the remittance. This allows the user to use various terminals, such as a PC, a mobile terminal including a mobile phone, an IC card utilizing a reader-writer, as the user terminal. That is, in the present exemplary embodiment, a terminal used for the payment or reception of the virtual money need not have a special function other than a network connection function. As a result, the remittance processing can be achieved without depending on the function of a terminal.

Further, the account used in the present exemplary embodiment is an account for managing the virtual money and is not relevant to an actual account in a banking institution. Thus, quick remittance can be achieved without connection to an external system (e.g., a server of a banking institution).

Further, the virtual money account in the present exemplary embodiment stores the virtual money that itself has a settlement value. Through transfer of the virtual money, the remittance and settlement can be performed. Thus, the use of the virtual money facilitates financial management to allow achievement of fee collection, grasp of circulation, and the like.

Further, in the above exemplary embodiment, it has been described that programs specific to the exemplary embodiment are previously stored in a settlement and remittance-processing system. However, the programs for operating a computer as the entirety or part of the settlement and remittance-processing system or executing the above described processing may be distributed in a state of being stored in a computer-readable recording medium such as a flexible disc CD-ROM (compact Disc Read-Only Memory), DVD (Digital Versatile Disc), MO (magneto Optical Disc), or BD (Blu-ray Disc), and these programs may be installed to another computer so as to be operated as the above-described means or caused to execute above-described steps.

For example, the settlement and remittance-processing system according to the exemplary embodiment of the present invention can be realized by hardware. Alternatively, the settlement and remittance-processing system can be realized when a computer reads a program that allows the computer to function as the settlement and remittance-processing system from a computer-readable recording medium and executes the program.

For example, a settlement and remittance-processing method according to the exemplary embodiment of the present invention can be realized by hardware. Alternatively, the settlement and remittance-processing method can be realized when a computer reads a program that allows the computer to execute the settlement and remittance-processing method from a computer-readable recording medium and executes the program.

The above-described exemplary embodiment is a preferred exemplary embodiment of the present invention, but is not one that limits the scope of the present invention to the exemplary embodiment only, and various modifications thereof can be carried out as far as they do not deviate from the spirit of the present invention.

This application is based upon and claims the benefit of priority from prior Japanese Patent Application No. 2010-119314 (filed May 25, 2010) under the Paris Convention, the entire contents of which are incorporated herein by reference. Although the representative exemplary embodiment of the present invention has been described, it should be understood that various changes, substitutions and alternatives can be made therein without departing from the sprit and scope of the invention as defined by the appended claims. Further, it is the inventor's intent to retain all equivalents of the claimed invention even if the claims are amended during prosecution.

The whole or part of the exemplary embodiment disclosed above can be described, as, but not limited to, the following supplementary notes.

(Supplementary note 1) A virtual money management apparatus that is connected to terminals used by users and a company's site connected to the users' terminal and configured to manage virtual money having a monetary value, the apparatus including: an account management storage section which stores a value of the virtual money owned by the users and company; an account management function section which includes virtual money accounts for each of the users and company and associates the virtual money accounts with the virtual money stored in the account management storage section to manage virtual money using the virtual money accounts; and a settlement/remittance management function section which receives designation of the user or company which is to be a transfer destination of the virtual money, not of the virtual money account which is to be a transfer destination of the virtual money, specifies a virtual money account associated with the designated user or company by using the account management function section, and transfers the virtual money to the specified virtual money account.

(Supplementary note 2) The virtual money management apparatus according to supplementary note 1, further including: a user management storage section which stores identifiers and the users and company identified by the identifiers in association with each other; and a user management function section which searches the user management storage section using the identifier to identify any of the users or company as a transmission source of the identifier, wherein the user or company which is to be transfer destination of the virtual money is identified by using the identifier.

(Supplementary note 3) The virtual money management apparatus according to supplementary note 1 or supplementary note 2, further including a "remittance account" which is a virtual money account of the virtual money management apparatus itself, wherein when the virtual money is to be transferred, the virtual money is transferred from the virtual money account of a transfer source to the remittance account, an inquiry as to whether the transfer of the virtual money is permitted or not is issued, after the transfer, to the user or company which is to be a transfer destination, and when a reply indicating permission is received, the virtual money is transferred from the remittance account to the transfer destination virtual money account.

(Supplementary note 4) The virtual money management apparatus according to supplementary note 3, wherein in a case where there is no reply to the inquiry after a predetermined period of time has elapsed, or where a reply indicating refusal is received, the virtual money that has been transferred to the remittance account is transferred back to the transfer source virtual money account to recover a state before the transfer.

(Supplementary note 5) The virtual money management apparatus according to any one of supplementary notes 1 to 4, wherein settlement as to trading between the company's site and user is made by the transfer of the virtual money, and transfer of the virtual money is further performed after the completion of the settlement to achieve awarding of the virtual money from the company's site to the user who has made the trading.

(Supplementary note 6) The virtual money management apparatus according to supplementary note 5, wherein settlement using both first virtual money and second virtual money different from the first virtual money is accepted, and the first virtual money and second virtual money are transferred to make the settlement.

(Supplementary note 7) A virtual money management method performed by a virtual money management apparatus that is connected to terminals used by users and a company's site connected to the users' terminal and configured to manage virtual money having a monetary value, the method including: a preparation step of preparing an account management storage section which stores a value of the virtual money owned by the users and company; an account management function step of managing virtual money using the virtual money accounts by providing virtual money accounts for each of the users and company and associating the virtual money accounts with the virtual money stored in the account management storage section; and a settlement/remittance management function step of receiving designation of the user or company which is to be a transfer destination of the virtual money, not of the virtual money account which is to be a transfer destination of the virtual money, specifying a virtual money account associated with the designated user or company by performing the account management function step, and transferring the virtual money to the specified virtual money account.

(Supplementary note 8) A virtual money management program installed in a virtual money management apparatus that is connected to terminals used by users and a company's site connected to the users' terminal and configured to manage virtual money having a monetary value, the program allowing a computer to function as a virtual money management apparatus including: an account management storage section which stores a value of the virtual money owned by the users and company; an account management function section which manages virtual money using the virtual money accounts by providing virtual money accounts for each of the users and company and associating the virtual money accounts with the virtual money stored in the account management storage section; and a settlement/remittance management function section which receives designation of the user or company which is to be a transfer destination of the virtual money, not of the virtual money account which is to be a transfer destination of the virtual money, specifies a virtual money account associated with the designated user or company by using the account management function section, and transfers the virtual money to the specified virtual money account.

(Supplementary note 9) The virtual money management program according to supplementary note 8, further including: a user management storage section which stores identifiers and the users and company identified by the identifiers in association with each other; and a user management function section which searches the user management storage section using the identifier to identify any of the users or company as a transmission source of the identifier, wherein the user or company which is to be transfer destination of the virtual money is identified by using the identifier.

(Supplementary note 10) The virtual money management program according, to supplementary note 8 or supplementary note 9, further including: a "remittance account" which is a virtual money account of the virtual money management program itself, wherein when the virtual money is to be transferred, the virtual money is transferred from the virtual money account of a transfer source to the remittance account, an inquiry as to whether the transfer of the virtual money is permitted or not is issued, after the transfer, to the user or company which is to be a transfer destination, and when a reply indicating permission is received, the virtual money is transferred from the remittance account to the transfer destination virtual money account.

(Supplementary note 11) The virtual money management program according to supplementary note 10, wherein in a case where there is no reply to the inquiry after a predetermined period of time has elapsed, or where a reply indicating refusal is received, the virtual money that has been transferred to the remittance account is transferred back to the transfer source virtual money account to recover a state before the transfer.

(Supplementary note 12) The virtual money management program according to any one of supplementary notes 8 to 11, wherein settlement as to trading between the company's site and user is made by the transfer of the virtual money, and transfer of the virtual money is further performed after the completion of the settlement to achieve awarding of the virtual money from the company's site to the user who has made the trading.

(Supplementary note 13) The virtual money management program according to supplementary note 12, wherein settlement using both first virtual money and second virtual money different from the first virtual money is accepted, and the first virtual money and second virtual money are transferred to make the settlement.

### Industrial Applicability

The present invention may suitably be applied to an electronic settlement market using the Internet, a mobile network, an advance network, and the like and an electronic money/electronic point settlement market using a reader-writer. Specifically, the present invention may suitably be applied to the field of an electronic mall, an EC site, remittance, and point exchange.

## Claims

1. A virtual money management apparatus that is connected to terminals used by users and a company's site connected to the users' terminal and configured to manage virtual money having a monetary value, the apparatus comprising:
an account management storage section which stores a value of the virtual money owned by the users and company;
an account management function section which manages virtual money accounts for each of the users and company and associates the virtual money accounts with the virtual money stored in the account management storage section to manage virtual money using the virtual money accounts; and
a settlement/remittance management function section which receives designation of the user or company which is to be a transfer destination of the virtual money, not of the virtual money account which is to be a transfer destination of the virtual money, specifies a virtual money account associated with the designated user or company by using the account management function section, and transfers the virtual money to the specified virtual money account.

2. The virtual money management apparatus according to claim 1, further comprising:
a user management storage section which stores identifiers and the users and company identified by the identifiers in association with each other; and
a user management function section which searches the user management storage section using the identifier to identify any of the users or company as a transmission source of me identifier, wherein
the user or company which is to be transfer destination of the virtual money, is identified by using the identifier.

3. The virtual money management apparatus according to claim 1 or claim 2, further comprising a "remittance account" which is a virtual money account of the virtual money management apparatus itself, wherein
when the virtual money is to be transferred, the virtual money is transferred from the virtual money account of a transfer source to the remittance account, an inquiry as to whether the transfer of the virtual money is permitted or not is issued, after the transfer, to the user or company which is to be a transfer destination, and when a reply indicating permission is received, the virtual money is transferred from the remittance account to the transfer destination virtual money account.

4. The virtual money management apparatus according to claim 3, wherein
in a case where there is no reply to the inquiry after a predetermined period of time has elapsed, or where a reply indicating refusal is received, the virtual money that has been transferred to the remittance account is transferred back to the transfer source virtual money account to recover a state before the transfer.

5. The virtual money management apparatus according to any one of claims 1 to 4, wherein
settlement as to trading between the company's site and user is made by the transfer of the virtual money, and transfer of the virtual money is further performed after the completion of the settlement to achieve awarding of the virtual money from the company's site to the user who has made the trading.

6. The virtual money management apparatus according to claim 5, wherein
settlement using both first virtual money and second virtual money different front the first virtual money is accepted, and the first virtual money and second virtual money are transferred to make the settlement.

7. A virtual money management method performed by a virtual money management apparatus that is connected to terminals used by users and a company's site connected to the users' terminal and configured to manage virtual money having a monetary value, the method comprising:
a preparation step of preparing an account management storage section which stores a value of the virtual money owned by the users and company;
an account management function step of managing virtual money using the virtual money accounts by providing virtual money accounts for each of the users and company and associating the virtual money accounts with the virtual money stored in the account management storage section; and
a settlement/remittance management function step of receiving designation of the user or company which is to be a transfer destination of the virtual money, not of the virtual money account which is to be a transfer destination of the virtual money, specifying a virtual money account associated with the designated user or company by performing the account management function step, and transferring the virtual money to the specified virtual money account.

8. A virtual money management program installed in a virtual money management apparatus that is connected to terminals used by users and a company's site connected to the users' terminal and configured to manage virtual money having a monetary value, the program allowing a computer to function as a virtual money management apparatus comprising:
an account management storage section which stores a value of the virtual money owned by the users and company;
an account management function section which manages virtual money using the virtual money accounts by providing virtual money accounts for each of the users and company and associates the virtual money accounts with the virtual money stored in the account management storage section; and
a settlement/remittance management function section which receives designation of the user or company which is to be a transfer destination of the virtual money, not of the virtual money account which is to be a transfer destination of the virtual money, specifies a victual money account associated with the designated user or company by using the account management function section, and transfers the virtual money to the specified virtual money account.
